Europäisches Patentamt

European Patent Office

Office européen des brevets

(11) Veröffentlichungsnummer: **0 113 387 B1**

(12) **EUROPÄISCHE PATENTSCHRIFT**

(45) Veröffentlichungstag der Patentschrift: **15.05.91**

(21) Anmeldenummer: **83104688.3**

(22) Anmeldetag: **12.05.83**

(51) Int. Cl.⁵: **B01J 47/08, B01D 61/42**

Die Akte enthält technische Angaben, die nach dem Eingang der Anmeldung eingereicht wurden und die nicht in dieser Patentschrift enthalten sind.

(54) Verfahren und Vorrichtung zum Behandeln von Flüssigkeiten, insbesondere Entsalzen wässriger Lösungen.

(30) Priorität: **13.05.82 DE 3217990**
**11.11.82 DE 3241681**
**11.11.82 DE 3241682**

(43) Veröffentlichungstag der Anmeldung:
**18.07.84 Patentblatt 84/29**

(45) Bekanntmachung des Hinweises auf die Patenterteilung:
**15.05.91 Patentblatt 91/20**

(84) Benannte Vertragsstaaten:
**AT BE CH DE FR GB IT LI NL SE**

(56) Entgegenhaltungen:
**CH-A- 501 431**
**FR-A- 2 397 861**
**US-A- 3 075 908**
**US-A- 3 645 884**
**US-A- 3 869 376**

(73) Patentinhaber: **EDR Acquisition Corporation**
**9 Burr Road**
**Westport Connecticut 06880(US)**

(72) Erfinder: **Kunz, Gerhard, Dipl.-Chem., Dr.-Ing.**
**Ruhrstrasse 111**
**W-5628 Heiligenhaus(DE)**

(74) Vertreter: **Merten, Fritz**
**Tristanstrasse 5**
**W-8500 Nürnberg 40(DE)**

## Beschreibung

Die Erfindung bezieht sich auf ein Verfahren und eine Vorrichtung zum Behandeln einer Flüssigkeit, insbesondere Entsalzen einer wäßrigen Lösung, bei dem die Flüssigkeit unterschiedlichen Adsorptionsvorgängen in Adsorptionszonen ausgesetzt wird, wobei in Elektrodenräumen unterschiedliche Ionen erzeugt werden und diese Ionen mit Hilfe eines elektrischen Spannungsfeldes ionenspezifische Membranen passieren und aus Anionentauscher- und Kationentauschermassen die aus der zu behandelnden Flüssigkeit stammenden und an den Austauschermassen absorbierten Kationen und Anionen in eine Solezone verdrängen und aus dieser Solezone in Form einer Salzlösung ausgespült werden, und diese behandelte Flüssigkeit nach Passieren dieser Vorgänge als behandeltes Produkt anfällt.

Es ist allgemein bekannt, daß Flüssigkeiten, insbesondere wäßrige Lösungen, wie Wasser aller Art für den industriellen Bedarf, bei vielen Anwendungsfällen praktisch frei von Salz bzw. deren ionogenen Dissoziationskomponenten sein müssen.

Zu diesem Zweck werden für die Aufbereitung solcher Flüssigkeiten diverse Verfahren angewendet, durch die solche in Flüssigkeiten gelöste Salze entfernt werden.

So ist es bei der Wasseraufbereitung seit langem bekannt, durch Absorption der Ionen an geeigneten Stoffen, beispielsweise Ionenaustauschermassen, die im Wasser gelösten Salze zu entfernen. Dies hat jedoch den erheblichen Nachteil, daß die sich immer wieder erschöpfenden Austauschermassen mit gefährlichen Chemikalien, wie Säuren und Laugen, regeneriert werden müssen. Es kommt auch hinzu, daß im Vergleich zur eliminierten Salzmenge eine erheblich größere Menge dieser Chemikalien aufgewendet werden muß, die mit dem Abwasser ausgespült wird und eine von der heutigen Gesellschaft nicht mehr akzeptierbare Umweltbelastung darstellt, so beispielsweise Zerstörung der Biosphäre in den Oberflächengewässern u.a. Um diese Nachteile zu vermeiden, ist es auch bekannt, Ionenaustauschermassen mit Hilfe elektrischer Energie zu regenerieren. Der praktischen Anwendung dieser Methode stand bisher dagegen, daß der Energieaufwand zur Erzeugung ausreichender Kapazität für die Abscheidung der Salzionen verhältnismäßig hoch ist, und daß die apparativen Ausführungen viel zu aufwendig sind und den technisch-industriellen Anforderungen nicht immer entsprechen.

Ferner ist ein Verfahren gem. der USA-PS 3,645,884 bekannt, das unter dem Namen "Elektrodialyse" im Einsatz ist, bei dem eine ionendurchlässige bzw. ionensperrende Wirkung einer Ionenaustauschermembran genutzt wird, und zwar dergestalt, daß die Ionen der zu entsalzenden Flüssigkeit bzw. wäßrigen Lösung im elektrischen Feld durch die Membranen hindurch auseinanderwandern und durch entsprechende Anordnung dieser Membranen Räume der Salzan- und Salzabreicherung entstehen. Bei dieser Methode haben sich sowohl im Verfahren, als auch in seiner apparativen Ausführung erhebliche Mängel gezeigt. Wenn das Wasser entsalzt wird, nimmt sein Salzgehalt im Verlauf des Prozesses ab. Dabei steigt aber der elektrische Widerstand derart an, daß ein wirtschaftlicher Betrieb für hohe Entsalzungsgrade bei einem solchen bekannten Verfahren nicht zu erzielen ist. Dies hängt damit zusammen, daß bei der Entsalzung von zu behandelnden Flüssigkeiten beide Ionenarten der Salze, also Kationen und Anionen, in äquivalenten Mengen aus den adsorbierenden Austauscherschichten verdrängt bzw. entfernt werden müssen. Die Verdrängung der Kationen erfolgt durch die an der Anode erzeugten Wasserstoffionen und die Verdrängung der Anionen erfolgt durch die an der Kathode erzeugten Hydroxylionen.

Da aber die Wasserstoffionen eine größere Beweglichkeit als die Hydroxylionen haben, ist ihre Wanderungsgeschwindigkeit im elektrischen Feld größer und damit ihre Konzentration geringer, also auch ihre Verdrängerwirkung (Regenierwirkung), und damit auch der erzielbare Entsalzungsgrad.

Hier setzt die Erfindung ein, der die Aufgabe zugrunde liegt, eine wäßrige Lösung ohne Verwendung von Regenerierchemikalien zu entsalzen, dabei hohe Entsalzungsgrade zu erreichen und trotzdem den Energieverbrauch niedrig zu halten und die Vorrichtung zur Durchführung des Verfahrens sowohl unempfindlich gegen Verschmutzung als auch in einem weiten Bereich variabler Durchsätze praktikabel und betriebssicher auszuführen und dabei die Produktqualität und die Ausstoßleistung über einen weiten Zeitraum unverändert zu erhalten.

Gemäß der Erfindung wird diese Aufgabe verfahrenstechnisch dadurch gelöst, daß

a) die in den Elektrodenräumen erzeugten Kationen und Anionen auf ihrem Weg zur jeweiligen Adsorptionszone je eine den Elektrodenraum begrenzende, ionenspezifische Membran passieren, anschließend eine jeweils erste Ionenaustauschermasse passieren und in dieser Ionenaustauschermasse eine Ionenverschiebung der aus der Flüssigkeit stammenden und an der Ionenaustauschermasse verdrängten Ionen zu jeweils einer zweiten ionenspezifischen Membran fördern und diese zweite Membran zusammen mit den verdrängten Ionen passieren und anschließend eine jeweils zweite Ionenaustauschermasse passieren und dabei eine erneute Ionenverschiebung bewirken und die verdrängten Ionen eine jeweils dritte ionenspezifische Membran passieren, wodurch sie in die Solezone gelangen,

b) daß die von dem Kationenstrom auf seinem Weg zur Solezone passierten Membranen kationendurchlässig und anionensperrend sind und die von dem Anionenstrom auf seinem Weg zur Solezone passierten Membranen anionendurchlässig und kationensperrend sind,

c) daß die Wegstrecken zwischen den kationendurchlässigen Membranen länger bemessen sind als die Wegstrecken zwischen den anionendurchlässigen Membranen und

d) daß die Behandlung der Flüssigkeit in mehreren Schritten erfolgt, in der Weise, daß die Flüssigkeit im ersten Schritt durch die der Solezone unmittelbar benachbarten, zweiten Kationentauschermasse, im zweiten Schritt durch die der Solezone unmittelbar benachbarten, zweiten Anionentauscher, im dritten Schritt durch die erste Kationentauschermasse und im vierten Schritt durch die erste Anionentauschermasse geleitet wird.

Zum Durchführen dieses Verfahrens wird erfindungsgemäß eine Vorrichtung verwendet, welche aus mindestens einem Gefäß mit in diesem angeordneten Reaktionskammern für eine in diesen Kammern zu behandelnde Flüssigkeit besteht, wobei diese Kammern mit Zu- und Ableitungen für die Flüssigkeit, wie auch einer Reaktionskammer für eine aus dieser Vorrichtung auszuscheidenden Sole ausgestattet sind, und welche Vorrichtung erfindungsgemäß sich dadurch auszeichnet,

daß die Reaktionskammern für die zu behandelnde Flüssigkeit als von Ionenaustauschermembranen als Grenzschichten gebildeten Kammern ausgeführt und diese Kammern mit jeweils einer Ionenaustauschermasse aufgefüllt sind,

daß jede Ionenaustauschermembrane eine Durchlässigkeit für jeweils bestimmte Ionen aufweist, für gegensätzlich geladene Ionen wie auch Flüssigkeit hingegen undurchlässig ausgeführt ist,

daß im Bereich dieser Reaktionskammern Elektrodenkammern für in diese Kammern eingelegten Elektroden vorgesehen sind, von denen eine Elektrodenkammer für die Anode der mit einer Kationenaustauschermasse gefüllten Reaktionskammer und eine weitere Elektrodenkammer für die Kathode mit einer Anionenaustauschermasse gefüllten Reaktionskammer zugeordnet ist,

daß diese Kammern über die als Sperrschichten ausgeführten Ionenaustauschermembranen allein ionendurchlässig miteinander verbunden sind, wie auch der Reaktionskammer für die Kationenaustauschermasse kationendurchlässige und an der Reaktionskammer für die Anionenaustauschermasse anionendurchlässige Ionenaustauschermembranen vorgesehen sind,

und daß zwischen mindestens je einer mit Kationenaustauschermasse gefüllten Reaktionskammer und je einer mit Anionenaustauschermasse gefüllten Reaktionskammer eine sie von den Ionenaustauschermembranen begrenzte Solekammer vorgesehen ist.

Durch diese Maßnahmen einer selektiven Absorption mit einem diese Reaktionskammern im Kreuzstrom überlagernden, im elektrischen Feld wandernden und von den Elektroden ausgehenden Ionenströmen und der sich daraus ergebenden, gerichteten Diagonalwanderung der ionischen Salzkomponenten aus der zu behandelnden Flüssigkeit bzw. der zu behandelnden Lösung in einen Soleraum wird die der Erfindung zugrunde liegende Aufgabe nicht nur vorteilhaft gelöst, sondern es wird auch eine Reihe energetischer, verfahrenstechnischer, apparativer und wirtschaftlicher Vorteile erreicht. Diese Vorteile sind im einzelnen:

a) Der von den Elektroden und den Elektrodenkammern her in die zu behandelnde Flüssigkeit bzw. zu entsalzende Lösung einwandernde Ionenstrom bewirkt eine hohe Leitfähigkeit der Lösung selbst noch dann, wenn ihr Salzgehalt auf extrem niedrige Werte abgesunken ist, also der Entsalzungsgrad sehr hoch geworden ist. Dadurch wird der von der Elektrodendialyse bekannte Nachteil des Widerstandsanstiegs bei niedrigen Salzgehalten vermieden, und es wird erreicht, daß die elektrische Spannung und mithin auch der Energieverbrauch selbst bei sehr guten Qualitäten wirtschaftlich bleibt.

b) Dadurch, daß der einwandernde Ionenstrom den elektrischen Widerstand niedrig hält, kann der vorrichtungsmäßige Aufwand für die gleichmäßige Zuführung der zu entsalzenden Lösung als auch der für die Abführung der Sole entfallen, und es kann somit der Membranabstand wesentlich größer als bei der bekannten Elektrodialyse gehalten werden. Dies bedeutet, daß der Durchgang zwischen den Membranen sehr breit ausgeführt werden kann, wodurch die Anfälligkeit des Durchganges der Reaktionskammern für Verschmutzungen, wie sie bei engen Durchgängen vielfach üblich sind, vollständig entfällt. Es kommt hinzu, daß der bekannt ermaßen fertigungstechnisch sehr aufwendige und kostspielige Einbau von Schikanen zur Strömungsführung und Abstandhaltung für die Membranen ebenfalls entfällt.

c) Die Austauschermassen befinden sich während des Entsalzungsvorganges in einem dynamischen Gleichgewicht ihrer Ionenkonzentrationen, benötigen also keinerlei Speicherkapazität und damit auch keine Regenerationen. Dies ist ein wesentlicher Vorteil in doppelter Hinsicht. Zum einen entfallen die Regenerierchemikalien und damit als Folgeerscheinung die Aufsalzung der Gewässer, was eine geringere Umweltbelastung und eine bessere Lebensqualität für unsere Gesellschaft bedeutet, zum anderen entfallen größere Ionenaustauschermengen, die bei den bisherigen Verfahren stets benötigt werden, sei es im regenerierten oder beladenen Zustand, und die am eigentlichen Entsalzungsvorgang noch nicht oder nicht mehr beteiligt sind. Diese nicht mehr benötigten Mengen an Ionenaustauschermasse bedeuten eine erhebliche Minderung auch des Investitionsaufwandes für die Vorrichtung selbst als auch hinsichtlich der Unterbringung dieser Massen wie auch deren Behandlung. Hinzu kommt, daß auch die Vorrichtung verkleinert werden kann und leichter zu plazieren ist.

d) Aufgrund des dynamischen Gleichgewichtes der Ionenkonzentrationen besteht eine direkte Funktion zwischen Produktqualität und Energieaufwand. Dies bietet den Vorteil, jede gewünschte Qualität in einem weiten Bereich, ohne Energieverluste, den Erfordernissen anzupassen. Weiterhin ist von Bedeutung, daß bei gleichbleibender oder variierender Produktqualität ebenfalls in einem weiten Bereich die Durchsatzleistung verändert und ebenso diese ohne Wirkungsgradverluste den Erfordernissen angepaßt werden kann.

e) Ein weiterer Vorteil der Erfindung ist, daß keinerlei Waschwassermengen benötigt werden und somit der Ausnutzungsgrad des Rohwassers sehr hoch ist und Wasserverluste vermieden werden. Daraus ergibt sich zusätzlich, daß die Solekonzentration, verglichen mit anderen, bekannten Entsalzungsverfahren, beispielsweise der umgekehrten Osmose oder auch der konventionellen Vollentsalzung mit Ionenaustauschermassen, ganz wesentlich höher liegt, ein Vorteil ebenfalls in doppelter Hinsicht:

Die Abwasserbelastung der Vorfluter und der Verbrauch an immer knapper werdendem Rohwasser werden geringer.

In den besonderen, praktischen Anwendungsfällen, in denen nicht die entsalzte Lösung, sondern die Sole das gewünschte Produkt ist, wie z.B. bei der Rückgewinnung von Metallen aus anorganischen Abwässern, die Wertstoffe oder auch Giftstoffe (z.B. Quecksilber) sein können, ist eine möglichst hohe Konzentration außerordentlich erwünscht, weil dadurch die sich anschließenden Verfahrensschritte zur Reingewinnung, etwa elektrolytische Abscheidungen oder chemische Fällungen, wesentlich wirtschaftlicher werden.

f) Ein sehr deutlicher Vorteil des erfindungsgemäßen Verfahrens ist, beispielsweise im Vergleich zur chemischen Regeneration bei Vollentsalzungsanlagen, daß die Sole neutral anfällt und weder Neutralisationsvorrichtungen, noch Neutralisationschemikalien benötigt werden, was niedrigeren apparativen Aufwand, geringere Betriebsmittelkosten und geringere Gewässeraufsalzung bedeutet.

Eine weitere, vorteilhafte Weiterbildung der Erfindung zeichnet sich in verfahrensspezifischer Hinsicht dadurch aus, daß der Behandlungsvorgang der Flüssigkeit bei einer höheren Reaktionstemperatur durchgeführt wird, daß die in Wärmeenergie umgewandelte elektrische Energie benutzt wird, und zwar dergestalt, daß die beim Entsalzungsvorgang direkt entstehende Wärme durch Isolation gegen Ableitung und Abstrahlung in den Entsalzungsräumen gehalten wird, daß die kapazitive Wärme der den Entsalzungsvorgang verlassenden Flüssigkeitsströme den Flüssigkeitsströmen, die dem Entsalzungsvorgang zufließenden, wieder zugeführt wird, und daß darüber hinaus die Entsalzungstemperatur noch weiter durch Zuführung von Wärmeenergie in den Entsalzungsvorgang von außen gesteigert wird.

Durch diese Maßnahmen, d.h. einer Entsalzung durch Absorptionsvorgänge in einem elektrischen Feld, wird nicht nur die der Erfindung zugrunde liegende Aufgabe vorteilhaft gelöst, sondern es wird zudem eine Reihe weiterer, wirtschaftlicher, verfahrenstechnischer Vorteile erzielt. Diese Vorteile sind im einzelnen:

a) Die höhere Temperatur während der Behandlung der Flüssigkeit, d.h. während des Entsalzungsvorganges im elektrischen Feld, bewirkt eine intensivere Ionenbewegung und Ionenbeweglichkeit in dem zu entsalzenden Medium und damit einen geringeren Widerstand für den Ionentransport bei den Absorptions- und Diffusionsvorgängen. Dies läßt eine wesentlich niedrigere, treibende elektrische Spannungsdifferenz zu. Da der Energieaufwand zur Eliminierung einer bestimmten Ionenmenge beim Entsalzungsvorgang dem Produkt aus Stromstärke und Spannung entspricht, wird also der Energieverbrauch erheblich herabgesetzt. Messungen haben ergeben, daß die Einsparung an elektrischer Energie bei einer Temperatursteigerung um 30 Grad Celsius bis zu 50 % beträgt.

b) Die Herabsetzung der elektrischen Spannung durch die erfindungsgemäßen Maßnahmen erlaubt eine kostengünstigere Auslegung der Vorrichtungen für die elektrische Energieversorgung, was eine Herabsetzung der Investitionskosten bedeutet.

c) Die durch höhere Temperatur bewirkte, größere Ionenbeweglichkeit ergibt einen schnelleren Ablauf der kinetischen Vorgänge bei der Entsalzung, so daß die Vorrichtung für den Entsalzungsvorgang bei gleicher Leistung kleiner ausgeführt werden kann, also eine Herabsetzung der Investitionskosten bedeutet.

d) Durch die erfindungsgemäße Maßnahme einer höheren Entsalzungstemperatur werden einige Salzanteile der zu entsalzenden, wässrigen Lösung, beispielsweise Silikatverbindungen, wesentlich schneller aus der entsprechenden Reaktionskammer für den Entsalzungvorgang verdrängt als bei tieferer Temperatur, was trotz geringem elektrischem Energieaufwand eine deutliche Verbesserung der Entsalzungsqualität entspricht.

e) Die Rückführung der in den ablaufenden Flüssigkeitsströmen enthaltenen, kapazitiven Wärme in den Entsalzungsvorgang und die Isolierung des Entsalzungsvorganges gegen die Wärmeleitungs- und Wärmestrahlungsverluste bewirkt eine Temperaturerhöhung im Entsalzungsvorgang ohne zusätzliche Energie.

f) Wird ein Entsalzungsvorgang mit geringer Entsalzungsleistung betrieben, so reicht die Wärmerückführung und die Wärmeisolation des Entsalzungsvorganges nicht aus, einen günstigen höheren Temperaturbereich zu erzielen. Die erfindungsgemäße Zuführung von Fremdwärme in den Entsalzungsvorgang bewirkt dann den wirtschaftlicheren, höheren Temperaturbereich, wobei die größere Wirtschaftlichkeit dadurch zustande kommt, daß der für den Entsalzungsvorgang günstigere Temperaturbereich mit kostengünstiger Wärme niedrigen Temperaturniveaus, beispielsweise Abwärme, erzielt wird und hochwertige elektrische Energie eingespart wird.

Eine weitere, vorteilhafte Weiterbildung der Erfindung besteht darin, daß den aus dem Kationenraum herausgedrängten Kationen, beispielsweise Calziumionen, Anionen, beispielsweise Chloridionen, zugeführt werden, die mit den Kationen aus dem Entsalzungsvorgang leichtlösliche Verbindungen bilden, und daß den aus dem Anionenraum herausgedrängten Anionen, beispielsweise Karbonationen, Kationen, beispielsweise Natriumionen, zugeführt werden, die mit den Anionen aus dem Entsalzungsvorgang leichtlösliche Verbindungen bilden, wobei diese Kationen und Anionen inform einer Salzlösung oder einer Salzschlemmung, beispielsweise Natriumchlorid, zugeführt und durch Grenzschichten von den aus dem Kationenraum herausgedrängten Kationen und von aus dem Anionenraum herausgedrängten Anionen abgeschirmt werden, und wo die dissoziierten Kationen und Anionen dieser Salzlösung im elektrischen Feld für den Entsalzungsvorgang dergestalt auseinander wandern, daß die Anionen in den kationenseitigen Soleraum der Entsalzung und die Kationen in den anionenseitigen Soleraum der Entsalzung durch die jeweiligen Grenzschichten hindurchgeleitet werden, dagegen die entsprechend gegensätzlich geladenen Ionen diese Grenzschicht nicht passieren können, und wobei die kationenseitige Sole und die anionenseitige Sole jeweils separat aus dem Entsalzungsvorgang ausgeschleust werden.

Durch diese Maßnahmen, insbesondere der Zuführung leichtlöslicher Salzkomponenten in den Anreicherungsvorgang der Entsalzung im elektrischen Feld und der Bildung leichtlöslicher Verbindungen sowohl mit den aus der Kationen-Reaktionskammer verdrängten Anionen, wird die der Erfindung zugrunde liegende Aufgabe nicht nur vorteilhaft gelöst, sondern es wird auch eine Reihe wirtschaftlicher und verfahrenstechnischer Vorteile erreicht. Diese Vorteile sind im einzelnen:

a) Die Zugabe leichtlöslicher Salzbildungskomponenten verhindert Ausfällungen schwerlöslicher Substanzen bei der Soleanreicherung und damit einen Anstieg des ohmschen Widerstandes für den Durchgang der Ionenströme, woraus sich wesentlich niedrigere, notwendige Spannungsdifferenzen für den Ionentransport bzw. die Ionenverdrängung ergeben und damit einen entsprechend niedrigeren Energieverbrauch für die Entsalzung.

b) Die Herabsetzung der elektrischen Spannung durch die erfindungsgemäßen Maßnahmen erlaubt eine kostengünstigere Auslegung der Vorrichtung für die elektrische Energieversorgung, was eine Herabsetzung der Investitionskosten bedeutet.

c) Durch die erfindungsgemäßen Maßnahmen wird der Entsalzungsvorgang unabhängig von der Zusammensetzung der zu entsalzenden Lösung, wodurch aufwendige Maßnahmen zur Vorreinigung der zu entsalzenden Lösung entfallen, sicherer im Betrieb, weniger störanfällig und in der Investition wie auch im Betrieb kostengünstiger.

d) Die Durchführung der Ausfällung bzw. Auskristallisation außerhalb der eigentlichen Entsalzungsvorrichtung in einem dafür ausgebildeten Mischgefäß erlaubt die Abtrennung der aus der Entsalzung stammenden schwerlöslichen Substanzen und die Rückführung, also Wiederverwendung der Salzlösung zur erneuten Bildung leichtlöslicher Verbindungen.

e) Die erfindungsgemäße Kreislaufführung der Salzlösung bzw. der aus ihr dissoziierten Ionenkomponenten verhindert eine Aufsalzung der Abwässer und damit eine Zunahme der Salzfracht im Vorfluter, wie sie sich aus einer Reihe bekannter Vorbehandlungsverfahren zwangsläufig ergibt.

f) Wenn in bestimmten Anwendungsfällen nicht die entsalzte wässrige Lösung sondern die aufkonzentrierte Sole das gewünschte Produkt ist, kann durch die erfindungsgemäße Zuführung leichtlöslicher Ionenkomponenten eine wesentlich höhere Aufkonzentrierung erreicht werden, was wiederum die meisten Folgeprozesse zur Aufarbeitung der Sole erheblich verbilligt, beispielsweise nachfolgende elektrolytische Trennoperationen durch Verringerung des Badvolumens und/oder nachfolgende Fällungsreaktionen durch das verringerte Reaktionsvolumen.

Weitere vorteilhafte Weiterbildungen der Erfindung können insbesondere den verbleibenden Unteransprüchen entnommen werden.

In der Zeichnung ist ein Ausführungsbeispiel der Erfindung, ohne diese auf dieses allein zu beschränken, schematisch dargestellt. Es zeigt:

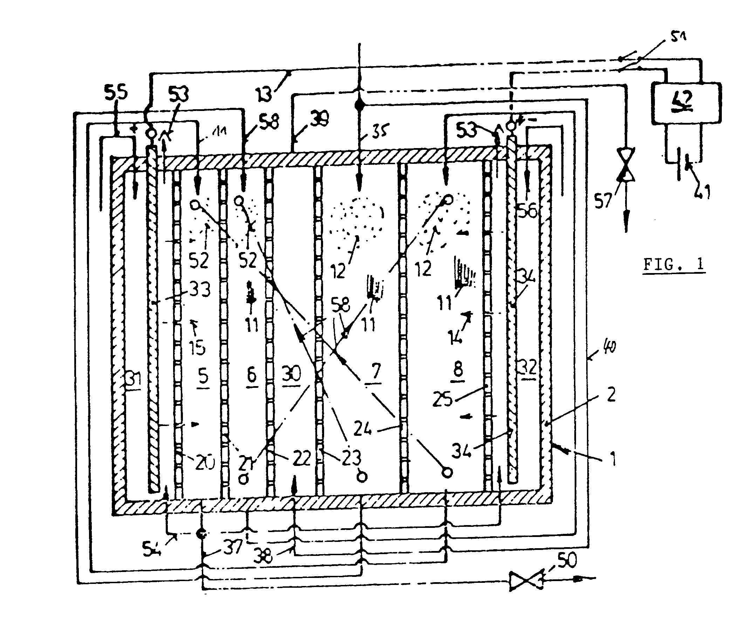

Fig. 1 einen Längsmittelschnitt durch eine Vorrichtung mit vier in einem Gefäß angeordneten Reaktionskammern, wobei diese in Strömungsrichtung der zu behandelnden Flüssigkeit längsgeteilt sind,

Das Ausführungsbeispiel der Erfindung gemäß Fig. 1 zeigt wie zum einen die Reaktionskammern 5 bis 8 in Strömungsrichtung der zu behandelnden Flüssigkeit 11 längsgeteilt sind.

Hierbei wird gemäß Fig. 3 durch die Zuführungsleitung 35, z.B. die zu behandelnde Flüssigkeit 11, bzw. Lösung, in die Reaktionskammer 7 der Kationenaustauschermasse 12 von oben nach unten geleitet, von dort zum Eintritt in die Reaktionskammer 6 der Anionenaustauschermasse 52, dann durch die weitere Reaktionskammer 8 der Kationenaustauschermasse 12, dann durch die weitere Reaktionskammer 5 der Anionenaustauschermasse 52 usw. geführt, um dann nach Durchlaufen dieser Reaktionskammern als behandelte Flüssigkeit, d.h. Produkt, über die Produktleitung 37 die Vorrichtung 1 zu verlassen. Im Gegenstrom dazu wird auch hier ein Teil des Rohwassers, d.h. der zu behandelnden Flüssigkeit 11, durch die Leitung 38 von unten der Solekammer 30 zugeleitet, durchströmt diese Kammer von unten nach oben und gelangt vom oberen Ende dieser Kammer in die Soleablaufleitung 39 bzw. in einen Kanalablauf. Von der Anode 34 und der Elektrodenkammer 32 aus bewegt sich ein Wasserstoffionenstrom 14 quer zur Strömungsrichtung der zu behandelnden Flüssigkeit 11 durch die kationendurchlässigen Ionenaustauschermembranen 23 bis 25 in die Solekammer 30. Gleichzeitig und mit gleicher Menge bewegt sich von der anderen Seite, ausgehend von der Kathode 33 und der Kathodenkammer 31, ein Hydroxylionenstrom 15 quer zur Strömungsrichtung der zu behandelnden Flüssigkeit 11 durch die anionendurchlässige Ionenaustauschermembranen 20 - 22 und durch die Anionenaustauschermassen 52 in die gleiche Solekammer 30.

Die Behandlung der Flüssigkeit 11 bzw. die Entsalzung des Rohwassers erfolgt nach dem erfindungsgemäßen Verfahren in mehreren Teilschritten. In den Anodenkammern aller Ausführungen der Vorrichtungen befindet sich verdünnte Schwefelsäure, die in bekannter Weise als sich nicht verbrauchendes Medium die Wasserstoffionenbildung an den Anoden aller Ausführungen ermöglicht. Entsprechend einer an den Elektroden 33, 34; angelegten Gleichspannung und entsprechend dem Widerstand des Gesamtsystems, d.h. der Vorrichtung, fliessen die an den Amperemetern eines Regel- und Meßkreises 42 ablesbaren elektrischen Ströme. Diesen Strömen äquivalent bewegen sich die Wasserstoffionenströme 14, wie beschrieben, in die Richtung der Solekammer 30. Sie kreuzen dabei den Kationenstrom 14 der Flüssigkeit 11, beispielsweise deren Metallionen, der sich in der zu behandelnden Flüssigkeit 11 von oben nach unten durch die Kationenaustauschermassen 12 bewegt. Es stellen sich dabei die bekannten Gleichgewichte zwischen den Konzentrationen der Ionenarten einerseits und der wäßrigen und andererseits in der Austauscherphase ein. Als treibende Differenz für die Bewegung der Ionen 14, 15 fungiert vertikal die Flüssigkeitsströmung und horizontal die elektrische Spannung. Da die Ionenaustauschermassen 12, 52 jedoch eine um das Vielfache höhere Ionenkonzentration haben als die sie umgebende Lösung, spielen sich die Transportvorgänge fast ausschließlich in der Austauscherphase ab. Dies hat den entscheidenden Vorteil, daß für den Transport ein viel geringerer Widerstand zu überwinden und eine entsprechend geringere Energiemenge aufzubringen ist, als in der reinen wäßrigen Lösung, was sich insbesondere im Bereich niedriger Ionenkonzentrationen im Wasser, also wenn es schon fast total entsalzt ist, auswirkt.

Da die Wasserstoffionen 14 über die ganze Länge gleichmäßig verteilt nachgeliefert werden, nimmt die Ionenkonzentration der zu behandelnden Flüssigkeit 11, beispielsweise die Konzentration von Metallionen, von oben nach unten ab. Entsprechend den Gesetzmäßigkeiten für die Verteilung der Ionen 14, 15 zwischen verschiedenen Phasen mit verschiedener Selektivität wird eine für die Praxis akzeptable Verschiebungsgeschwindigkeit der Gleichgewichte und deren Lage nur mit dem Überschuß einer Komponente erreicht. Um einerseits die Gleichgewichte schnell und zur Seite geringer Ionenkonzentrationen zu verschieben und andererseits aber die Überschußkomponente, also die Wasserstoffionenmenge 14, weitgehend auszunutzen, was der elektrischen Stromausnutzung gleichkommt, wird das Rohwasser bzw. die zu behandelnde Flüssigkeit 11 zuerst in den solenahen Bereich hoher Ionenkonzentrationen, also durch die Kationenaustauschermasse 12 geleitetund erst dann, wenn die Ionenkonzentration schon abgenommen hat, in den Bereich hoher Wasserstoffionenkonzentration 14, also durch die Kationenaustauschermasse in der Reaktionskammer geleitet. Durch diese Kationenaustauschermasse 12 fließt es aber erst, nachdem es die Anionenaustauschermasse 52 in der Reaktionskammer passiert hat, also Anionen abgegeben und dadurch wieder neutral geworden ist (vgl. Fig. ). Dies bedeutet, wie bekannt, eine zusätzliche Verschiebung der Selektivität in die gewünschte Richtung. Der Mechanismus der Anionenbewegungen in den Anionenaustauschermassen 52 der Reaktionskammern, 5, 6 ist analog. Zur Förderung der Hydroxylionenbildung sind die Elektrodenkammern 31 für Kathode 33 mit verdünnter Natronlauge gefüllt. Da die Beweglichkeit der Wasserstoffionen 14 größer ist als die der Hydroxylionen 15 ist ihre Konzentration und damit ihre Wirkung auf die gewünschte Gleichgewichtsverschiebung geringer. Dies wird erfindungsgemäß auch hier ausgeglichen durch eine längere Verweilzeit, d.h. breiter angeordneter Reaktionskammern; 7, 8, im Vergleich zu den Reaktionskammern; 5, 6 für die Anionenaustauschermassen 52.

Nach Verlassen der Anionenaustauschermasse 52 fließt die noch weiter zu entsalzende Lösung durch die Kationenaustauschermasse 12 in der Reaktionskammer und die Anionenaustauschermasse 52 in der Reaktionskammer und wird von den beiden Ionenströmen 14, 15 gekreuzt. Diese erfindungsgemäße Aufteilung des Gesamtionenstromes auf zwei oder mehrere Stufen bietet den Vorteil, daß die elektrische Spannung und damit der Energieverbrauch für die Bewegung der Teilionenströme geringer ist. Es kommt weiter hinzu, daß aufgrund der geringeren Ionenkonzentration in der zu behandelnden Flüssigkeit beim Eintritt in jede Folgestufe auch der Ionenstrom 14, 15 geringer sein kann, was eine geringere Gleichgewichtskonzentration der Ionen in der Lösung, also eine bessere Produktqualität der behandelten Flüssigkeit, bedeutet.

Die Sperrwirkung der Ionenaustauschermembranen ist nicht vollständig. In der Praxis zeigt sich eine Durchlässigkeit für Gegenionen, d.h. Ionen entgegengesetzter Ladung, bis zu etwa 2 % der zu sperrenden Ionenkonzentration. Dies würde in der letzten Austauschermasse zu einer Qualitätsverschlechterung führen. Erfindungsgemäß wird daher die zuletzt durchflossene Ionenaustauschermasse von dickeren oder doppelten Membranen begrenzt.

Wird in der zweiten Stufe der Ionenstrom 14, 15, also auch der elektrische Strom zu den Elektroden 33, 34, abgeschaltet, so entfällt auch vollständig die Überführung von Gegenionen in das Produkt, d.h. in die behandelte Flüssigkeit 11. Dadurch können Teilmengen des Produktes mit optimaler Qualität entnommen werden.

Es hat sich ferner ergeben, daß bei einer parallelgeschalteten Doppelausführung gemäß der Fig. 4 der zweiten bzw. letzten Stufe aus einem einzigen Rohwasserstrom, d.h. Flüssigkeit 11, zwei Teilströme mit verschiedenen Qualitäten erzeugt werden können, und zwar durch Einstellung verschieden starker Ionenströme 14, 15 in parallel geschalteten Vorrichtungen 1 am Ende einer solchen Mehrfachtraktion der Vorrichtungen.

Die von den Elektroden 33, 34; ausgehenden Ionenströme 14, 15 verbrauchen für ihre Erzeugung Wasser, was durch die Leitung 54, die an der Produktleitung 37 angeschlossen ist, nachgeliefert werden kann. Die Verluste an Metallionen, z.B. Natrium, in den Kathodenräumen 32 werden durch die Leitung 55, die Verluste an Anionen, z.B. Sulfationen, in den Anodenräumen 31 durch die Leitungen 56 nachgefüllt, was in Form verdünnter Schwefelsäure geschehen kann.

Versuche haben ferner gezeigt, daß der elektrische Widerstand der Vorrichtung 1 bzw. des Gesamtsystems und damit der Energieverbrauch niedriger ist, wenn die durch die Solekammer 30 strömende Flüssigkeit, d.h. Sole, durch ein Soleablaufventil 57 intermittierend abgezogen wird.

Die sich zu den Solekammern 30 hin bewegenden Ionenströme 14, 15 bewirken eine lokal unterschiedliche Erwärmung der hindurchströmenden Flüssigkeiten, wie z.B. in der zu behandelnden Flüssigkeit 11 und der Sole und auch der Ionenaustauschermassen 12, 52 sowie der Ionenaustauschermembranen. Dadurch entstehen Zonen unterschiedlichen elektrischen Widerstandes in der Vorrichtung 1 und damit eine Störung der gleichmäßigen Ionenstromverteilung 14, 15. Es wurde nun experimentell ermittelt, daß durch ein zeitweises Unterbrechen der Energiebeaufschlagung und ein gleichzeitig kurzes Unterbrechen des Produktstromes, d.h. der abfließenden Flüssigkeit 11 aus der Produktleitung 37, mit Hilfe eines Produktventils diese Inhomogenitäten vollständig beseitig werden können.

Um ein überhitzen der Reaktionskammern 5 bis 8; und/oder der Solekammer 30 bei Ausfall des Flüssigkeitsstromes (Rohwasser) zu vermeiden, ist ein Thermoschalter vorgesehen, der die Stromführung bei Erreichen kritischer Temperaturen in der Stromversorgung 41 unterbricht. Bei der Erzeugung der oben beschriebenen Ionenströme 14, 15 an den Elektroden 33, 34 und 48 entstehen anodisch Sauerstoff und kathodisch Wasserstoff. Die Gase werden durch Entlüfter 53 aus der Vorrichtung 1 abgeleitet.

Berechnungen haben ergeben, daß die Wirtschaftlichkeit des erfindungsgemäßen Verfahrens, insbesondere bei hohen Salzgehalten der zu behandelnden Flüssigkeit 11 bzw. der zu entsalzenden Lösung, dadurch erheblich gesteigert werden kann, daß der Energieinhalt der anfallenden Gase in geeigneten Vorrichtungen, wie beispielsweise Wärmekraftmaschinen, Brennstoffzellen u.dgl., in elektrische Energie umgewandelt und diese Energie in die Elektroden 33, 34; zurückgeführt wird.

## Ansprüche

1. Verfahren zum Behandeln einer Flüssigkeit, insbesondere Entsalzen einer wäßrigen Lösung, bei dem die Flüssigkeit unterschiedlichen Adsorptionsvorgängen in Adsorptionszonen ausgesetzt wird, wobei in Elektrodenräumen unterschiedliche Ionen erzeugt werden und diese Ionen mit Hilfe eines elektrischen Spannungsfeldes ionenspezifische Membranen passieren und aus Anionentauscher- und Kationentauschermassen die aus der zu behandelnden Flüssigkeit stammenden und an den Austauschermassen absorbierten Kationen und Anionen in eine Solezone verdrängen und aus dieser Solezone in Form einer Salzlösung ausgespült werden, und diese behandelte Flüssigkeit nach Passieren dieser Vorgänge als behandeltes Produkt anfällt, dadurch gekennzeichnet, daß

a) die in den Elektrodenräumen erzeugten Kationen und Anionen auf ihrem Weg zur jeweiligen Adsorptionszone je eine den Elektrodenraum begrenzende, ionenspezifische Membran passieren, anschließend eine jeweils erstelonenaustauschermasse passieren und in dieser Ionenaustauschermasse eine Ionenverschiebung der aus der Flüssigkeit stammenden und an der Ionenaustauschermasse adsorbierten Ionen bewirken und die aus der Ionentauschermasse verdrängten Ionen zu jeweils einer zweiten ionenspezifischen Membran fördern und diese zweite Membran zusammen mit den verdrängten Ionen passieren und anschließend eine jeweils zweite Ionenaustauschermasse passieren und dabei eine erneute Ionenverschiebung bewirken und die verdrängten Ionen eine jeweils dritte ionenspezifische Membran passieren, wodurch sie in die Solezone gelangen,

b) daß die von dem Kationenstrom auf seinem Weg zur Solezone passierten Membranen kationendurchlässig und anionensperrend sind und die von dem Anionenstrom auf seinem Weg zur Solezone passierten Membranen anionendurchlässig und kationensperrend sind,

c) daß die Wegstrecken zwischen den kationendurchlässigen Membranen länger bemessen sind als die Wegstrecken zwischen den anionendurchlässigen Membranen und

d) daß die Behandlung der Flüssigkeit in mehreren Schritten erfolgt, in der Weise, daß die Flüssigkeit im ersten Schritt durch die der Solezone unmittelbar benachbarten, zweiten Kationentauschermasse, im zweiten Schritt durch die der Solezone unmittelbar benachbarten, zweiten Anionentauscher, im dritten Schritt durch die erste Kationentauschermasse und im vierten Schritt durch die erste Anionentauschermasse geleitet wird.

2. Verfahren nach Anspruch 1, dadurch gekennzeichnet, daß der Grad der Verdrängung der sich in der Flüssigkeit und Ionenaustauschermasse befindenden Ionen durch Variation einer auf in den Elektrodenräumen angeordneten Elektroden zur Erzeugung von Ionen einwirkenden Stromstärke und eines dadurch ausgelösten Ionenstromes quer zur Richtung der Flüssigkeitsströmung bewirkt wird, und daß diese Verdrängung kontinuierlich erfolgt.

3. Verfahren nach Anspruch 2, dadurch gekennzeichnet, daß der Grad der Verdrängung der sich in der Flüssigkeit und Ionenaustauschermasse befindenden Ionen in Abhängigkeit von der Strömungsmenge (Durchsatzleistung pro Zeiteinheit) der zu behandelnden Flüssigkeit und der Konzentration bzw. Salzmenge der in dieser Flüssigkeit sich befindenden Ionen, wie auch der sich in der behandelten Flüssigkeit befindenden Restkonzentration der Ionen regelbar ist.

4. Verfahren nach mindestens einem der Ansprüche 1 bis 3, dadurch gekennzeichnet, daß zur Vermeidung eines Einschleppens von störenden Ionen (von den schleppenden entgegengesetzt geladenen Ionen) die Membranen des letzten von der Flüssigkeit zu passierenden Absorptionsvorganges eine größere Abschirmwirkung gegen die störenden Ionen als die restlichen Membranen aufweisen.

5. Verfahren nach einem der Ansprüche 1 bis 4, dadurch gekennzeichnet, daß zum Abbauen von Inhomogenitäten in den Absorptionszonen und/oder Solezonen die Strömung der zu behandelnden Flüssigkeit und/oder Sole und/oder Zufuhr des auf die Elektroden wirkenden Stromes nach längeren Zeitintervallen kurzzeitig unterbrochen wird.

6. Verfahren nach Anspruch 5, dadurch gekennzeichnet, daß die Unterbrechung der Zufuhr des elektrischen Stromes zu den Elektroden gleichzeitig mit der Unterbrechung der Zufuhr der zu behandelnden Flüssigkeit erfolgt.

7. Verfahren nach Anspruch 1, dadurch gekennzeichnet, daß ein an den Elektroden entstandenes Elektrolytgas zum Zwecke einer Energierückgewinnung dessen Energieinhalt in elektrische Energie umgewandelt und diese insbesondere dem Verfahren rückführbar ist.

8. Vorrichtung zum Durchführen des Verfahrens nach einem der Ansprüche 1 bis 7, bestehend aus mindestens einem Gefäß mit in diesem angeordneten Reaktionskammern für eine in diesen zu behandelnde Flüssigkeit, wobei diese Kammern mit Zu- und Ableitungen für die Flüssigkeit ausgestattet sind, und das Gefäß auch mindestens eine Kammer für die Abscheidung der Sole aufweist, dadurch gekennzeichnet, daß die Reaktionskammern (5 - 8 und) für die zu behandelnde Flüssigkeit (11) als von Ionenaustauschermembranen (20 - 25;) gebildeten Kammern ausgeführt und diese Kammern mit jeweils einer Ionenaustauschermasse (12, 52) aufgefüllt sind, daß jede Ionenaustauschermembrane eine Durchlässigkeit für jeweils bestimmte Ionen aufweist, für gegensätzlich geladene Ionen wie auch Flüssigkeit hingegen undurchlässig ausgeführt ist, daß im Bereich dieser ReaktionsKammern Elektrodenkammern (31, 32;) für in diese Kammern eingelegte Elektroden (33, 34;) vorgesehen sind, von denen eine Elektrodenkammer (32) für die Anode (34) der mit einer Kationenaustauschermasse (12) gefüllten Reaktionskammer (7, 8) und eine Elektrodenkammer (31) für die Kathode (33) mit einer Anionenaustauschermasse (52) gefüllten Reaktionskammer (5, 6) zugeordnet ist, und daß diese Kammern über die als Sperrschichten ausgeführten Ionenaustauschermembranen (24, 25) allein ionendurchlässig miteinander verbunden sind, wie auch der Reaktionskammer (7, 8) für die Kationenaustauschermasse (12) kationendurchlässige und an der Reaktionskammer (5, 6) für die Anionenaustauschermasse (52) anionendurchlässige Ionenaustauschermembranen (20, 21) vorgesehen sind, und daß zwischen mindestens je einer mit Kationenaustauschermasse (12) gefüllten Reaktionskammern (7, 8) und je einer mit Anionenaustauschermasse (52) gefüllten Reaktionskammer (5, 6) eine sie von den Ionenaustauschermembranen (22, 23) begrenzte Solekammer (30) vorgesehen ist.

9. Vorrichtung nach Anspruch 8, dadurch gekennzeichnet, daß solche aus den Reaktionskammern (5 - 8;), den Elektrodenkammern (31, 32;) und der Solekammer (30) bestehende Einheiten (Vorrichtung 1) als Mehrfachtraktion in Reihe hintereinander geschaltet sind.

10. Vorrichtung nach Anspruch 9, dadurch gekennzeichnet, daß bei Mehrfachtraktion solcher Einheiten (Vorrichtung 1) diese so aneinander gereiht sind, daß sie anodenseitig und/oder kathodenseitig aneinander grenzen, und daß die aneinander angrenzenden Reaktionskammern über jeweils eine Ionenaustauschermembrane an der jeweiligen Elektrodenkammer gemeinsam angeschlossen sind.

11. Vorrichtung nach Anspruch 8, dadurch gekennzeichnet, daß zur Versorgung der Elektrodenkammern (31, 32;) mit Flüssigkeit diese über Versorgungsleitungen (54) am Zulauf der zu behandelnden Flüssigkeit (11) und/oder am Ablauf der behandelten Flüssigkeit angeschlossen sind.

12. Vorrichtung nach Anspruch 11, dadurch gekennzeichnet, daß zusätzlich zu diesen Versorgungsleitungen (54) die Elektrodenkammern (31, 32;) an einer sie mit Elektrodenflüssigkeit versorgenden Leitung (55, 56) angeschlossen sind.

13. Vorrichtung nach Anspruch 8, dadurch gekennzeichnet, daß die Elektrodenkammern (31, 32;) Entgasungsmittel (53) für das Ableiten der Elektrolytgase aufweisen.

14. Vorrichtung nach Anspruch 13, dadurch gekennzeichnet, daß in den Reaktionskammern (5 - 8;) und/oder in der Solekammer (30) Thermoschalter für die Überwachung und Regelung der Reaktionstemperatur vorgesehen und diese Thermoschalter an einem Regel- und Meßkreis (42) einer Stromversorgung (41) angeschlossen sind.

15. Verfahren nach Anspruch 1, dadurch gekennzeichnet, daß den aus dem Kationenraum herausgedrängten Kationen, beispielsweise Calziumionen, Anionen, beispielsweise Chloridionen, zugeführt werden, die mit den Kationen aus dem Entsalzungsvorgang leichtlösliche Verbindungen bilden, und daß den aus dem Anionenraum herausgedrängten Anionen, beispielsweise Karbonationen, Kationen, beispielsweise Natriumionen zugeführt werden, die mit den Anionen aus dem Entsalzungsvorgang leichtlösliche Verbindungen bilden, wobei diese Kationen und Anionen inform einer Salzlösung oder einer Salzschlemmung beispielsweise Natriumchlorid, zugeführt und durch Membranen von den aus dem Kationenraum herausgedrängten Kationen und von aus dem Anionenraum herausgedrängten Anionen abgeschirmt werden, und wo die dissoziirten Kationen und Anionen dieser Salzlösung im elektrischen Feld für den Entsalzungsvorgang dergestalt auseinander wandern, daß die Anionen in den kationenseitigen Soleraum der Entsalzung und die Kationen in den anionseitigen Soleraum der Entsalzung durch die jeweiligen Membranen hindurchgeleitet werden, dagegen die entsprechend gegensätzlich geladenen Ionen diese Membran nicht passieren können, und wobei die kationenseitige Sole und die anionenseitige Sole jeweils separat aus dem Entsalzungsvorgang ausgeschleust werden.

16. Verfahren nach Anspruch 15, dadurch gekennzeichnet, daß die aus dem Entsalzungsvorgang separat ausgeschleusten Solen (kationenseitige Sole und anionenseitige Sole) außerhalb des Entsalzungsvorganges wieder vereinigt, und die schwerlöslichen Anteile dieser Sole ausgefällt und abgetrennt werden.

17. Verfahren nach Anspruch 16, dadurch gekennzeichnet, daß die Lösungen der leichtlöslichen Komponenten der Solen als Salzlösung zur Neubildung leichtlöslicher Entsalzungsverbindungen in den Anreicherungsvorgang der Solebildung zurückgeführt werden.

18. Vorrichtung zum Durchführen des Verfahrens nach Anspruch 15, bestehend aus mindestens einem Gefäß mit in diesem angeordneten Reaktionskammern, für eine in diesen Kammern zu behandelnde Flüssigkeit, wobei diese Kammern mit Zu- und Ableitungen für die Flüssigkeit ausgestattet sind und die Reaktionskammern für die zu behandelnde Flüssigkeit als von Ionenaustauschermembranen als Grenzschichten gebildeten Kammern ausgeführt und diese Kammern mit jeweils einer Ionenaustauschermasse aufgefüllt sind, sowie jede Ionenaustauschermembrane eine Durchlässigkeit für jeweils bestimmte Ionen aufweist, für gegensätzlich geladene Ionen wie auch Flüssigkeit hingegen undurchlässig ausgeführt ist, wie auch die Vorrichtung mit den diesen Reaktionskammern zugeordneten Elektrodenkammern sowie den mit Kationen- und Anionenaustauschermassen gefüllten, jeweiligen Reaktionskammern zugeordneten Ionenaustauschermembranen ausgestattet ist, dadurch gekennzeichnet, daß sie mit mehreren Zu- und Ableitungen für Sole und Salzlösungsströme ausgestattet ist, daß zwischen mindestens je einer mit Kationenaustauschermasse gefüllten Reaktionskammer und je einer mit Anionenaustauschermasse gefüllten Reaktionskammer sowohl kationenseitig als auch anionenseitig eine von den Ionenaustauschermembranen begrenzte Solekammer vorgesehen ist, daß die kationenseitige, einen Anschluß für zu entsalzende Flüssigkeit und die anionenseitige einen für Produktflüssigkeit besitzt, und daß zwischen diesen Solekammern eine Salzkammer für die Zuführung leichtlöslicher Salzkomponenten mittels Ionenaustauschermembranen als Grenzschichten gebildet wird, und daß die Ionenaustauschermembranen zur kationenseitigen Solekammer für Anionen durchlässig und die Kationen sperrend und die Ionenaustauschermembranen zur anionenseitigen Solekammer für Kationen durchlässig und für Anionen sperrend vorgesehen ist.

19. Vorrichtung nach Anspruch 18, dadurch gekennzeichnet, daß beide Solekammern über jeweils eine Leitung an ein gemeinsames Mischgefäß angeschlossen sind.

20. Vorrichtung nach Anspruch 19, dadurch gekennzeichnet, daß an diesem Mischgefäß sowohl eine Ableitung für die auskristallisierten, schwerlöslichen Substanzen als auch eine Ableitung für die die leichtlöslichen Komponenten enthaltende Salzlösung angeschlossen ist, und daß diese Ableitung über eine Pumpe mit der Zuleitung zur Salzkammer verbunden ist.

21. Vorrichtung nach Anspruch 20, dadurch gekennzeichnet, daß die Ableitung aus der Salzkammer als Zuleitung zum Mischgefäß ausgebildet ist, und dieses Mischgefäß eine Zuleitung für Salzlösung und/oder Salzlösungsflüssigkeit besitzt.

22. Verfahren nach Anspruch 1, dadurch gekennzeichnet, daß der Behandlungsvorgang der Flüssigkeit bei einer höheren Reaktionstemperatur durchgeführt wird, daß die in Wärmeenergie umgewandelte elektrische Energie benutzt wird, und zwar dergestalt, daß die beim Entsalzungsvorgang direkt entstehende Wärme durch Isolation gegen Ableitung und Abstrahlung in den Entsalzungsräumen gehalten wird, daß die kapazitive Wärme der den Entsalzungsvorgang verlassenden Flüssigkeitströme den Flüssigkeitsströmen, die dem Entsalzungsvorgang zufließenden, wieder zugeführt wird, und daß darüber hinaus die Entsalzungstemperatur noch weiter durch Zuführung von Wärmeenergie in den Entsalzungsvorgang von außen gesteigert wird.

23. Verfahren nach Anspruch 22, dadurch gekennzeichnet, daß die zusätzliche Wärmeenergie direkt in den Entsalzungsvorgang eingeleitet wird.

24. Verfahren nach Anspruch 22, dadurch gekennzeichnet, daß die zusätzliche Wärmeenergie indirekt in den Entsalzungsvorgang eingeleitet wird.

25. Verfahren nach Anspruch 22, dadurch gekennzeichnet, daß die zusätzliche Wärmeenergie zunächst den dem Entsalzungsvorgang zufließenden Flüssigkeitsströmen eingeleitet und dann von diesen aus dem Entsalzungsvorgang zugeführt wird.

26. Verfahren nach Anspruch 22, dadurch gekennzeichnet, daß die Höhe der zusätzlich zugeführten Wärmeenergie mindestens der Höhe der Reaktionswärme entspricht.

27. Vorrichtung zum Durchführen des Verfahrens nach Anspruch 1, dadurch gekennzeichnet, daß diese Vorrichtung aus mindestens einem Wärmetauscher mit in diesem angeordneten Wärmeaustauschkammern und Wärmeübertragungsflächen für die verschiedenen Flüssigkeitsströme besteht, daß diese Wärmeaustauschkammern mit Zu- und Ableitungen für die Flüssigkeitsströme ausgestattet sind, und daß die Wärmeübertragungsflächen nacheinander angeordnet sind.

28. Vorrichtung nach Anspruch 27, dadurch gekennzeichnet, daß der in die Vorrichtung einfließende und die Wärmeenergie transportierende Flüssigkeitsstrom alle Wärmeaustauschkammern nacheinander passieren.

29. Vorrichtung nach Anspruch 27, dadurch gekennzeichnet, daß jedem Heizstrom eine separate Wärmeaustauschkammer zugeordnet ist.

30. Vorrichtung nach Anspruch 27, dadurch gekennzeichnet, daß die Wärmeaustauschkammern in Strömungsrichtung des aufzuheizenden Flüssigkeitsstromes mit steigender Zulauftemperatur den Aufheizströmen zugeordnet sind.

31. Vorrichtung nach Anspruch 27, dadurch gekennzeichnet, daß der Wärmetauscher in der die Absorptionsräume aufnehmenden Vorrichtung mit integriert ist.

32. Vorrichtung nach Anspruch 27, dadurch gekennzeichnet, daß der Wärmetauscher außerhalb der die Absorptionsräume aufnehmenden Vorrichtung angeordnet ist.

Claims

1. A method of treating a liquid, in particular desalinating an aqueous solution, in the case of which the liquid is exposed to different adsorption procedures in adsorption zones, in which respect different ions are produced in electrode chambers and these ions pass with the aid of an electrical potential field through ion-specific membranes and drive out of anion-exchanger and cation-exchanger substances the cations and anions, stemming from the liquid that is to be treated and absorbed at the exchanger substances, into a sol zone and these are flushed out from this sol zone in the form of a salt solution, and this treated liquid after passing through these procedures accrues as a treated product, characterised in that

a) the cations and anions produced in the electrode chambers on their way to the respective adsorption zone each pass through an ion-specific membrane bounding the electrode chamber, then pass through a respective first ion exchanger substance and bring about, in this ion exchanger substance, an ion displacement of the ions stemming from the liquid and adsorbed at the ion exchanger substance and convey the ions driven out of the ion exchanger substance to in each case a second ion-specific membrane and pass through this second membrane together with the driven-out ions and then pass through a respective second ion exchanger substance and in so doing bring about a renewed ion displacement and the driven-out ions pass through a respective third ion-specific membrane, whereby they pass into the sol zone,

b) in that the membranes passed through by the stream of cations on its way to the sol zone are cation-pervious and anion-blocking and the membranes passed through by the stream of anions on its way to the sol zone are anion-pervious and cation-blocking,

c) in that the path lengths between the cation-pervious membranes are larger in size than the path lengths between the anion-pervious membranes and

d) in that the treatment of the liquid is effected in several steps, in such a way that the liquid is conducted in the first step through the second cation exchanger substance directly adjacent to the sol zone, in the second step through the second anion exchanger directly adjacent to the sol zone, in the third step through the first cation exchanger substance and in the fourth step through the first anion exchanger substance.

2. A method according to claim 1, characterised in that the degree of displacement of the ions present in the liquid and ion exchanger substance is brought about by variation of a current intensity acting on electrodes, arranged in the electrode chambers, for the generation of ions, and of a thereby triggered stream of ions transverse to the direction of the stream of liquid, and in that this displacement is effected continuously.

3. A method according to claim 2, characterised in that the degree of displacement of the ions present in the liquid and ion exchanger substance is adjustable as a function of the amount of flow (throughput capacity per unit of time) of the liquid that is to be treated and of the concentration or amount of salt of the ions present in this liquid, and of the residual concentration of the ions present in the treated liquid.

4. A method according to at least one of claims 1 to 3, characterised in that, to avoid introducing disturbing ions (ions charged oppositely to the dragging ones), the membranes of the last absorption procedure to be passed through by the liquid have a greater shielding effect against the disturbing ions than the remaining membranes.

5. A method according to one of claims 1 to 4, characterised in that, to reduce inhomogeneities in the absorption zones and/or sol zones, the flow of the liquid that is to be treated and/or sols and/or supply of the current acting on the electrodes is briefly interrupted after fairly long intervals of time.

6. A method according to claim 5, characterised in that the interruption of the supply of the electrical current to the electrodes is effected simultaneously with the interruption of the supply of the liquid that is to be treated.

7. A method according to claim 1, characterised in that an electrolyte gas which has arisen at the electrodes for the purpose of an energy recovery has its energy content converted into electrical energy and this can be fed back more especially to the method.

8. A device for carrying out the method according to one of claims 1 to 7, consisting of at least one vessel with reaction chambers arranged therein far a liquid that is to be treated in these, in which respect these chambers are equipped with supply pipes and drainage pipes for the liquid, and the vessel also has at least one chamber for the precipitation of the sols, characterised in that the reaction chambers (5 - 8) for the liquid (11) that is to be treated are realised as chambers formed by ion exchanger membranes (20 - 25) and these chambers are filled with a respective ion exchanger substance (12, 52), in that each ion exchanger membrane has a perviousness for respectively specific ions, but is impervious in execution for oppositely charged ions and also liquid, in that provided in the region of these reaction chambers are electrode chambers (31, 32) for electrodes (33, 34) inserted into these chambers, of which one electrode chamber (32) for the anode (34) is associated with the reaction chamber (7, 8) filled with a cation exchanger substance (12), and one electrode chamber (31) for the cathode (33) is associated with the reaction chamber (5, 6) filled with an anion exchanger substance (52), and in that these chambers are connected to one another in a solely ion-pervious manner by way of the ion exchanger membranes (24, 25) realised as blocking layers, and also provided on the reaction chamber (7, 8) for the cation exchanger substance (12) there are cation-pervious ( and on the reaction chamber (5, 6) for the anion exchanger substance (52) there are anion-pervious) ion exchanger membranes (20, 21), and in that provided between at least one respective reaction chamber (7, 8) filled with cation exchanger substance (12) and one respective reaction chamber (5, 6) filled with anion exchanger substance (52) there is a sol chamber (30) bounded by the ion exchanger membranes (22, 23).

9. A device according to claim 8, characterised in that such units, (device 1) consisting of the reaction chambers (55 - 8), the electrode chambers (31, 32) and the sol chamber (30) are connected as multiple traction in series one behind the other.

10. A device according to claim 9, characterised in that upon multiple traction of such units (device 1) these are so arranged that they are contiguous at the anode side and/or cathode side, and in that the contiguous reaction chambers are connected jointly by way of a respectively ion exchanger membrane to the respective electrode chamber.

11. A device according to claim 8, characterised in that, for the supply of the electrode chambers (31, 32) with liquid, these chambers are connected by way of supply pipes (54) to the inlet of the liquid (11) that is to be treated and/or to the outlet of the treated liquid.

12. A device according to claim 11, characterised in that, in addition to these supply pipes (54), the electrode chambers (31, 32) are connected to a pipe (55, 56) supplying them with electrode liquid.

13. A device according to claim 8, characterised in that the electrode chambers (31, 32) have degassing means (53) for leading off the electrolyte gases.

14. A device according to claim 13, characterised in that thermoswitches for monitoring and regulating the reaction temperature are provided in the reaction chambers (5 - 8) and/or in the sol chamber (30) and these thermoswitches are connected to a regulating and measuring circuit (42) of a current supply (41).

15. A method according to claim 1, characterised in that to the cations driven out of the cation chamber, for example calcium ions, there are supplied anions, for example chloride ions, which form, with the cations from the desalination procedure, easily soluble compounds, and in that to the anions driven out of the anion chamber, for example carbonate ions, there are supplied cations, for example sodium ions, which form, with the anions from the desalination procedure, easily soluble compounds, in which respect these cations and anions are supplied in the form of a salt solution or of a salt saturation, for example sodium chloride, and are shielded by membranes from the cations driven out of the cation chamber and from the anions driven out of the anion chamber, and in which respect the dissociated cations and anions of this salt solution travel apart in the electrical field for the desalination procedure in such a way that the anions in the cation-side desalination sol chamber are conducted through the respective membranes, but the correspondingly oppositely charged ions cannot pass through this membrane, and in which respect the cation-side sols and the anion-side sols are in each case removed separately from the desalination procedure.

16. A method according to claim 15, characterised in that the sols (cation-side sole and anion-side sole) removed separately from the desalination procedure are united again outside the desalination procedure, and those contents of these sols which are difficult to dissolve are precipitated and separated.

17. A method according to claim 16, characterised in that the solutions of the easily soluble components of the sols are returned as salt solution for the re-formation of easily soluble desalination compounds into the enrichment procedure of the sol formation.

18. A device for carrying out the method according to claim 15, consisting of at least one vessel with reaction chambers arranged in this, for a liquid that is to be treated in these chambers, in which respect these chambers are equipped with supply and drainage pipes for the liquid and the reaction chambers for the liquid that is to be treated are realised as chambers formed by ion exchanger membranes as boundary layers and these chambers are filled with a respective ion exchanger substance, and each ion exchanger membrane has a perviousness for respective specific ions, but is impervious in design for oppositely charged ions and also liquid, and the device is equipped with ion exchanger membranes which are associated with the electrodes chambers associated with these reaction chambers, and with ones which are associated with the respective reaction chambers filled with cation and anion exchanger substances, characterised in that the device is equipped with several supply and drainage pipes for sols and salt solution flows, in that provided between at least one respective reaction chamber filled with cation exchanger substance and one respective reaction chamber filled with anion exchanger substance, both at the cation side and at the anion side, there is a sol chamber bounded by the ion exchanger membranes, in that the cation-side one possesses a connection for liquid that is to be desalinated and the anion-side one possesses one for product liquid, and in that between these sol chambers a salt chamber for the supply of easily soluble salt components is formed by means of ion-exchanger membranes as boundary layers, and in that there are provided ion exchanger membranes for the cation-side sol chamber, pervious for anions and blocking the cations, and ion exchanger membranes for the anion-side sol chamber, pervious for cations and blocking the anions.

19. A device according to claim 18, characterised in that both sol chambers are connected by way of a respective pipe to a joint mixing vessel.

20. A device according to claim 19, characterised in that to the mixing vessel there is connected both a drainage pipe for the substances which have been crystallized out and which are difficult to dissolve and a drainage pipe for the salt solution containing the easily soluble components, and in that this drainage pipe is connected by way of a pump to the supply pipe to the salt chamber.

21. A device according to claim 20, characterised in that the drainage pipe from the salt chamber is designed as a supply pipe to the mixing vessel, and this mixing vessel possesses a supply pipe for salt solution and/or salt solution liquid.

22. A method according to claim 1, characterised in that the treatment procedure of the liquid is carried out at a higher reaction temperature, in that the electrical energy converted into thermal energy is used, namely in such a way that the heat arising directly upon the desalination procedure is held by insulation against convection and radiation in the desalination chambers, in that the capacitive heat of the streams of liquid leaving the desalination procedure is supplied again to the streams of liquid ( the ones flowing to the desalination procedure ) and in that, in addition to this, the desalination temperature is raised still further by supplying thermal energy into the desalination procedure from the outside.

23. A method according to claim 22, characterised in that the additional thermal energy is introduced directly into the desalination procedure.

24. A method according to claim 22, characterised in that the additional thermal energy is introduced indirectly into the desalination procedure.

25. A method according to claim 22, characterised in that the additional thermal energy is initially introduced to the streams of liquid flowing to the desalination procedure and is then supplied from these to the desalination procedure.

26. A method according to claim 22, characterized in that the level of the additionally supplied thermal energy corresponds at least to the level of the reaction heat.

27. A device for carrying out the method according to claim 1, characterized in that this device consists of at least one heat exchanger with heat exchange chambers and heat surfaces arranged in this for the various streams of liquid, in that these heat exchanger chambers are equipped with supply and drainage pipes for the streams of liquid, and in that the heat transfer surfaces are arranged one after the other.

28. A device according to claim 27, characterised in that the streams of liquid flowing into the device and transporting the thermal energy pass through all the heat exchange chambers one after the other.

29. A device according to claim 27, characterized in that a separate heat exchange chamber is associated with each heat stream.

30. A device according to claim 27, characterized in that the heat exchange chambers in the direction of flow of the stream of liquid that is to be heated up with rising inlet temperature are associated with the heat streams.

31. A device according to claim 27, characterised in that the heat exchanger is also integrated in the device receiving the absorption chambers.

32. A device according to claim 27, characterised in that the heat exchanger is arranged outside the device receiving the absorption chambers.

## Revendications

1. Procédé pour traiter un liquide, notamment pour déminéraliser une solution aqueuse, selon lequel le liquide est soumis à différents processus d'adsorption dans des zones d'adsorption, différents ions étant produits dans des chambres d'électrodes et ces ions traversant des membranes qui leur sont spécifiques à l'aide d'un champ électrique et délogeant les cations et anions provenant du liquide à traiter et absorbés sur des masses échangeuses d'anions et des masses échangeuses de cations, pour les transférer de ces masses échangeuses dans une zone de saumure, d'où ils sont évacués sous la forme d'une solution saline, et le liquide ayant été soumis à ces processus étant obtenu comme produit traité, caractérisé

a) en ce que les cations et anions produits dans les chambres d'électrodes, sur leur trajet vers la zone d'adsorption respective, traversent une membrane respective qui délimite la chambre d'électrode et qui leur est spécifique, puis traversent une première masse échangeuse d'ions respective, produisent, dans cette masse échangeuse, un déplacement des ions provenant du liquide et adsorbés sur la masse échangeuse, refoulent les ions délogés de la masse échangeuse vers une deuxième membrane respective qui leur est spécifique, traversent cette deuxième membrane conjointement avec les ions délogés et traversent enfin une deuxième masse échangeuse d'ions respective et y produisent un nouveau déplacement d'ions, les ions délogés traversant une troisième membrane respective qui leur est spécifique, pour arriver dans la zone de saumure,

b) en ce que les membranes traversées par le flux de cations sur son trajet vers la zone de saumure sont perméables aux cations et imperméables aux anions, et les membranes traversées par le flux d'anions sur son trajet vers la zone de saumure sont perméables aux anions et imperméables aux cations,

c) en ce que les distances à parcourir entre les membranes perméables aux cations sont plus longues que les distances entre les membranes perméables aux anions, et

d) en ce que le traitement du liquide s'effectue en plusieurs étapes, le liquide étant dirigé à travers la deuxième masse échangeuse de cations, directement voisine de la zone de saumure, dans la premièreétape, à travers le deuxième échangeur d'anions, directement voisin de la zone de saumure, dans la deuxième étape, à travers la première masse échangeuse de cations dans la troisième étape et à travers la première masse échangeuse d'anions dans la quatrième étape.

2. Procédé selon la revendication 1, caractérisé en ce que le degré de délogement des ions qui se trouvent dans le liquide et la masse échangeuse d'ions est obtenu en faisant varier une intensité de courant, qui agit sur des électrodes disposées dans les chambres d'électrodes afin de produire des ions, et en faisant varier un flux d'ions ainsi déclenché perpendiculairement à la direction d'écoulement du liquide, et en ce que ce délogement s'effectue en continu.

3. Procédé selon la revendication 2, caractérisé en ce que le degré de délogement des ions qui se trouvent dans le liquide et la masse échangeuse d'ions peut être régulé en fonction de la quantité d'écoulement (débit par unité de temps) du liquide à traiter et de la concentration des ions qui se trouvent dans ce liquide ou encore de la quantité de sel, ainsi qu'en fonction de la concentration résiduelle d'ions présente dans le liquide traité.

4. Procédé selon l'une des revendications 1 à 3, caractérisé en ce qu'afin d'éviter une introduction par entraînement d'ions parasites (ions de charge opposée à celle des ions entraînés), les membranes du dernier processus d'absorption que doit subir le liquide présentent un plus grand effet d'écran vis-à-vis des ions parasites que les autres membranes.

5. Procédé selon l'une des revendications 1 à 4, caractérisé en ce qu'afin de supprimer les manques d'homogénéité dans les zones d'absorption et/ou les zones de saumure, l'écoulement du liquide à traiter et/ou de la saumure et/ou l'alimentation du courant agissant sur les électrodes est interrompu temporairement au bout d'intervalles de temps assez longs.

6. Procédé selon la revendication 5, caractérisé en ce que l'interruption de l'alimentation en courant électrique vers les électrodes s'effectue en même temps que l'interruption de l'alimentation en liquide à traiter.

7. Procédé selon la revendication 1, caractérisé en ce qu'un gaz électrolytique produit sur les électrodes est transformé en énergie électrique afin de récupérer son contenu énergétique, et cette énergie peut être notamment récupérée pour le procédé.

8. Dispositif pour la mise en oeuvre du procédé selon l'une des revendications 1 à 7, constitué d'au moins un récipient pour un liquide à traiter dans des chambres de réaction disposées dans ce récipient, ces chambres étant équipées de conduites d'alimentation et d'évacuation pour le liquide, et le récipient présentant également au moins une chambre pour la séparation de la saumure, caractérisé en ce que les chambres de réaction (5-8) pour le liquide (11) à traiter sont réalisées sous la forme de chambres constituées par des membranes échangeuses d'ions (20-25) et ces chambres sont remplies d'une masse échangeuse d'ions respective (12,52), en ce que chaque membrane échangeuse d'ions est perméable à des ions déterminés respectifs mais est imperméable aux ions de charge opposée ainsi qu'au liquide, en ce que des chambres d'électrodes (31,32), dans lesquelles sont installées des électrodes (33,34) sont prévues dans la région de ces chambres de réaction, une chambre d'électrode (32) pour l'anode (34) étant associée aux chambres de réaction (7,8) remplies d'une masse échangeuse de cations (12) et une chambre d'électrode (31) pour la cathode (33) étant associée aux chambre de réaction (5,6) remplies d'une masse échangeuse d'anions (52), et en ce que ces chambres sont mutuellement reliées, uniquement pour laisser passer les ions, par l'intermédiaire des membranes échangeuses d'ions (24,25) conçues comme couches de barrage, des membranes échangeuses d'ions (20, 21) étant également prévues, respectivement perméables aux cations sur la chambre de réaction (7,8) pour la masse échangeuse de cations (12) et sur la chambre de réaction (5,6) pour la masse échangeuse d'anions (52), et en ce qu'une chambre de saumure (30), délimitée par les membranes échangeuses d'ions (22,23), est prévue entre au moins une chambre de réaction respective (7,8) remplie de masse échangeuse de cations (12) et au moins une chambre de réaction respective (5,6) remplie de masse échangeuse d'anions (52).

9. Dispositif selon la revendication 8, caractérisé en ce que des unités (dispositif 1), constituées des chambres de réaction (5-8), des chambres d'électrodes (31,32) et de la chambre de saumure (30), sont montées en série les unes à la suite des autres, comme traction multiple.

10. Dispositif selon la revendication 9, caractérisé en ce qu'en cas de traction multiple de telles unités (dispositif 1), ces unités sont juxtaposées de telle sorte qu'elles sont limitrophes côté anode et/ou côté cathode, et en ce que les chambres de réaction limitrophes sont conjointement raccordées à la chambre d'électrode respective par l'intermédiaire d'une membrane échangeuse d'ions respective.

11. Dispositif selon la revendication 8, caractérisé en ce que, pour alimenter les chambres d'électrodes (31,32) en liquide, ces chambres sont raccordées par l'intermédiaire de conduites d'alimentation (54) à l'arrivée du liquide (11) à traiter ou à l'évacuation du liquide traité.

12. Dispositif selon la revendication 11, caractérisé en ce qu'en plus de ces conduites d'alimentation (54), les chambres d'électrodes (31,32) sont raccordées à une conduite (55,56) qui les alimente en liquide d'électrode.

13. Dispositif selon la revendication 8, caractérisé en ce que les chambres d'électrodes (31,32) présentent des moyens d'extraction de gaz (53), pour l'évacuation des gaz électrolytiques.

14. Dispositif selon la revendication 13, caractérisé en ce que des thermo-rupteurs sont prévus dans les chambres de réaction (5-8) et/ou dans la chambre de saumure (30) pour la surveillance et la régulation de la température de réaction, et ces thermo-rupteurs sont raccordés à un circuit de régulation et de mesure (42) d'une alimentation électrique (41).

15. Procédé selon la revendication 1, caractérisé en ce qu'on apporte aux cations refoulés de la chambre cationique, ions de calcium par exemple, des anions, ions de chlorure par exemple, qui forment avec les cations provenant du processus de déminéralisation des composés facilement solubles, et en ce qu'on apporte aux anions refoulés de la chambre anionique, ions de carbonate par exemple, des cations, ions de sodium par exemple, qui forment avec les anions provenant du processus de déminéralisation des composés facilement solubles, ces cations et anions étant apportés sous forme d'une solution saline ou d'une boue saline, chlorure de sodium par exemple, et protégés des cations refoulés de la chambre cationique et des anions refoulés de la chambre anionique par des membranes, et les cations et anions dissociés de cette solution saline migrant, dans le champ électrique pour le processus de déminéralisation, de telle sorte que les anions et les cations sont respectivement dirigés, à travers les membranes respectives, dans la chambre de saumure du côté cationique de la déminéralisation et dans la chambre de saumure du côté anionique de la déminéralisation, tandis que les ions correspondants de charge opposée ne peuvent pas traverser ces membranes, et la saumure du côté cationique et la saumure du côté anionique étant évacuées séparément du processus de déminéralisation.

16. Procédé selon la revendication 15, caractérisé en ce que les saumures évacuées séparément du processus de déminéralisation (saumure du côté cationique et saumure du côté anionique) sont à nouveau réunies à l'extérieur du processus de déminéralisation et les composants difficilement solubles de cette saumure sont précipités et extraits.

17. Procédé selon la revendication 16, caractérisé en ce que les solutions des composants facilement solubles des saumures sont ramenées sous forme de solution saline, afin de former à nouveau des composés de déminéralisation facilement solubles, au processus d'enrichissement de la formation de saumure.

18. Dispositif pour la mise en oeuvre du procédé selon la revendication 15, constitué d'au moins un récipient pour un liquide à traiter dans des chambres de réaction disposées dans ce récipient, ces chambres étant équipées de conduites d'alimentation et d'évacuation pour le liquide et les chambres de réaction pour le liquide à traiter étant réalisées sous la forme de chambres constituées par des membranes échangeuses d'ions et ces chambres étant remplies d'une masse échangeuse d'ions respective, et chaque membrane échangeuse d'ions étant perméable à des ions déterminés respectifs mais imperméable aux ions de charge opposée ainsi qu'au liquide, et le dispositif étant équipé des chambres d'électrodes associées à ces chambres de réaction ainsi que des membranes échangeuses d'ions associées aux chambres de réaction respectives remplies de masses échangeuses de cations et de masses échangeuses d'anions, caractérisé en ce qu'il est équipé de plusieurs conduites d'alimentation et d'évacuation pour des saumures et des flux de solution saline, en ce qu'une chambre de saumure, délimitée par les membranes échangeuses d'ions, est prévue, tant du côté cationique que du côté anionique, entre au moins une chambre de réaction respective remplie de masse échangeuse de cations et au moins une chambre de réaction respective remplie de masse échangeuse d'anions, en ce que la chambre de saumure du côté cationique possède un raccordement pour le liquide à déminéraliser et celle du côté anionique en possède un pour le liquide produit, et en ce qu'une chambre saline pour l'apport de composants salins facilement solubles est formée entre ces chambres de saumure à l'aide de membranes échangeuses d'ions comme couches séparatrices, et en ce que les membranes échangeuses d'ions vers la chambre de saumure du côté cationique sont perméables aux anions et imperméables aux cations, et les membranes échangeuses d'ions vers le chambre de saumure du côté anionique sont perméables aux cations et imperméables aux anions.

19. Dispositif selon la revendication 18, caractérisé en ce que les deux chambres de saumure sont raccordées par des conduites respectives à un récipient mélangeur commun.

20. Dispositif selon la revendication 19, caractérisé en ce qu'on raccorde à ce récipient mélangeur tant une conduite d'évacuation pour les substances difficilement solubles cristallisées qu'une conduite d'évacuation pour la solution saline contenant les composants facilement solubles, et en ce que cette conduite d'évacuation est reliée par l'intermédiaire d'une pompe à la conduite d'alimentation de la chambre saline.

21. Dispositif selon la revendication 20, caractérisé en ce que la conduite d'évacuation de la chambre saline est conçue comme conduite d'alimentation du récipient mélangeur, et ce récipient mélangeur possède une conduite d'alimentation de solution saline et/ou de liquide de solution saline.

22. Procédé selon la revendication 1, caractérisé en ce que le processus de traitement du liquide est réalisé à une température de réaction élevée, en ce qu'on utilise l'énergie électrique transformée en énergie calorifique, et ce de telle sorte que la chaleur directement produite lors du processus de déminéralisation est empêchée par isolation d'être dissipée et rayonnée par les chambres de déminéralisation, que la chaleur capacitive des flux de liquides quittant le processus de déminéralisation est rapportée aux flux de liquides arrivant au processus de déminéralisation, et que la température de déminéralisation est encore augmentée par apport d'énergie calorifique externe au processus de déminéralisation.

23. Procédé selon la revendication 22, caractérisé en ce que l'énergie calorifique supplémentaire est introduite directement dans le processus de déminéralisation.

24. Procédé selon la revendication 22, caractérisé en ce que l'énergie calorifique supplémentaire est introduire indirectement dans le processus de déminéralisation.

25. Procédé selon la revendication 22, caractérisé en ce que l'énergie calorifique supplémentaire d'abord introduite dans les flux de liquides arrivant au processus de déminéralisation, puis apportée au processus de déminéralisation par ces flux.

26. Procédé selon la revendication 22, caractérisé en ce que le montant de l'énergie calorifique supplémentaire apportée est au moins égal au montant de la chaleur de réaction.

27. Dispositif pour la mise en oeuvre du procédé selon la revendication 1, caractérisé en ce que ce dispositif est constitué d'au moins un échangeur thermique avec, disposées dans cet échangeur, des chambres d'échange de chaleur et des surfaces de transmission de chaleur pour les différents flux de liquides, en ce que ces chambres d'échange de chaleur sont équipées de conduite d'alimentation et d'évacuation pour les flux de liquides, et en ce que les surfaces de transmission de chaleur sont disposées les unes à la suite des autres.

28. Dispositif selon la revendication 27, caractérisé en ce que le flux de liquide entrant dans le dispositif et transportant l'énergie calorifique traverse successivement toutes les chambres d'échange de chaleur.

29. Dispositif selon la revendication 27, caractérisé en ce que une chambre d'échange de chaleur séparée est associée à chaque flux de chauffage.

30. Dispositif selon la revendication 27, caractérisé en ce que les chambres d'échange de chaleur sont associées aux flux de réchauffage dans le sens d'écoulement du flux de liquide à réchauffer avec une température d'alimentation croissante.

31. Dispositif selon la revendication 27, caractérisé en ce que l'échangeur thermique est incorporé dans le dispositif recevant les chambres d'absorption.

32. Dispositif selon la revendication 27, caractérisé en ce que l'échangeur thermique est disposé à l'extérieur du dispositif recevant les chambres d'absorption.

FIG. 1